# EUROPEAN PATENT APPLICATION

(11) **EP 4 749 762 A1**
(43) Date of publication of application: **27.05.2026**
(21) Application number: 25833481.2
(22) Date of filing: 30.06.2025
(51) Int. Cl.: H01M 10/48, G01L 3/00, H01M 10/04

(54) **DEVICE FOR INSPECTING CYLINDRICAL BATTERY CASE**

(30) Priority: 02.07.2024 KR 20240086876
(71) Applicant: LG Energy Solution, Ltd., Seoul 07335 (KR)
(72) Inventor: LEE, Jun Hyeok, Daejeon 34122 (KR)
(74) Representative: Goddar, Heinz J.
(86) International application number: PCT/KR2025/009252
(87) International publication number: WO 2026/010295

(57) **Abstract**

Disclosed is a cylindrical battery case inspection apparatus including a fixing unit configured to fix a cylindrical battery case, a support member attached to the fixing unit and supporting the fixing unit, a stand to which the support member is coupled, an inner diameter measurement unit configured to measure the inner diameter of the cylindrical battery case, and a pressure measurement unit coupled to the bottom of the inner diameter measurement unit, wherein a measurement unit including the inner diameter measurement unit and the pressure measurement unit is moved so as to be inserted into the cylindrical battery case in the state in which the cylindrical battery case is fixed to the fixing unit in order to determine whether the inner diameter of the cylindrical battery case is appropriate.

## Description

### [Technical Field]

This application claims the benefit of priority to Korean Patent Application No. 2024-0086876 filed on July 2, 2024, the disclosure of which is incorporated herein by reference in its entirety.

The present invention relates to a cylindrical battery case inspection apparatus. More particularly, the present invention relates to a cylindrical battery case inspection apparatus capable of not only determining whether an inner diameter measurement unit is inserted into a cylindrical battery case when measuring the inner diameter of the cylindrical battery case but also measuring the magnitude of force applied when the inner diameter measurement unit is inserted into the cylindrical battery case.

### [Background Art]

Lithium secondary batteries may be classified based on the material and form of a battery case in which an electrode assembly is mounted. Specifically, lithium secondary batteries are classified into a cylindrical battery having an electrode assembly mounted in a cylindrical battery case made of a metal, a prismatic battery having an electrode assembly mounted in a prismatic battery case made of a metal, and a pouch-shaped battery having an electrode assembly mounted in a pouch-shaped case manufactured by shaping an aluminum laminate sheet. Among these batteries, the cylindrical battery has the advantages of relatively large capacity and structural safety.

Generally, a cylindrical battery is manufactured by receiving a jelly-roll type electrode assembly configured such that a positive electrode sheet and a negative electrode sheet are wound with a separator sheet interposed therebetween in a cylindrical battery case and sealing the cylindrical battery case.

If the inner diameter of the cylindrical battery case is much larger than the diameter of the jelly-roll type electrode assembly, the wound state of the jelly-roll type electrode assembly may become loose and the space in the cylindrical battery case may be unnecessarily wasted, which is undesirable. If the inner diameter of the cylindrical battery case is almost equal to the diameter of the jelly-roll type electrode assembly, the jelly-roll type electrode assembly may be damaged during insertion of the jelly-roll type electrode assembly into the cylindrical battery case, potentially causing problems in subsequent processes.

During a cylindrical battery manufacturing process, therefore, an inspection is conducted to determine whether the diameter of the cylindrical battery case is appropriate. To this end, an inspection apparatus known as a go gauge and a no-go gauge may be used as an inspection apparatus that is cylindrical in shape with a certain diameter. Specifically, an operator determines whether the go gauge and the no-go gauge are inserted into the cylindrical battery case while manually inserting the go gauge and the no-go gauge into the cylindrical battery case. Precautions include prevention of forcible insertion while pressing the bottom of the cylindrical battery case, prevention of dropping the cylindrical battery case from above for insertion, and limited insertion only to a certain depth from the end of the cylindrical battery case. However, because the operator manually performs the inspection, it is difficult to maintain consistent inspection conditions, such as changes in the magnitude of force required for insertion or differences in insertion depth.

The go gauge and the no-go gauge have different inner diameters. If the go gauge is inserted into the cylindrical battery case, it may be determined that the cylindrical battery case is good, and if the no-go gauge is inserted into the cylindrical battery case, it may be determined that the cylindrical battery case is defective. However, even though the go gauge is inserted into the cylindrical battery case, the cylindrical battery case needs to be treated as defective if the force applied to the cylindrical battery case for insertion exceeds a certain level.

If the inner diameter of the cylindrical battery case is greater than but almost equal to the outer diameter of the jelly-roll type electrode assembly, the jelly-roll type electrode assembly is inserted into the cylindrical battery case by interference fitting, potentially damaging the jelly-roll type electrode assembly. In this case, therefore, the cylindrical battery case must be treated as defective.

Consequently, when measuring the inner diameter of the cylindrical battery case, it is necessary to simultaneously measure the pressure applied to the inspection apparatus inserted into the cylindrical battery case.

Patent Document 1 relates to a measuring apparatus and method for easily and precisely measuring the outer and inner diameters of a tubular member, wherein the outer and inner diameters of the tubular member are measured after the tubular member is disposed at a measurement position. However, it is not possible to measure the force required when inserting another part into the tubular member.

Patent Document 2 discloses a cylindrical battery cell measurement apparatus for measuring the shape of a cylindrical can to be formed, wherein the cylindrical battery cell measurement apparatus is configured to measure and display at least one selected from the group consisting of the height of a beading portion and the height of a crimping portion in the cylindrical can where the beading portion and crimping portion are formed.

Since the cylindrical battery cell measurement apparatus disclosed in Patent Document 2 is an apparatus for measuring at least one of the height of the beading portion and the height of the crimping portion in the cylindrical can where the beading portion and/or the crimping portion has already been formed, this patent document does not suggest a method of checking the magnitude of force required when inserting a jelly-roll type electrode assembly into a cylindrical battery case.

Consequently, there is a need for technology capable of determining whether the inner diameter of a cylindrical battery case is of a size that allows a jelly-roll type electrode assembly to be inserted into the cylindrical battery case without damage by simultaneously measuring the pressure when the jelly-roll type electrode assembly is inserted into the cylindrical battery case while measuring the inner diameter of the cylindrical battery case.

### (Prior Art Documents)

(Patent Document 1) Japanese Patent Application Publication No. 2017-146188 (2017.08.24)
(Patent Document 2) Korean Patent Application Publication No. 2012-0010319 (2012.02.03)

### [Disclosure]

### [Technical Problem]

The present invention has been made in view of the above problems, and it is an object of the present invention to provide a cylindrical battery case inspection apparatus capable of not only measuring the inner diameter of a cylindrical battery case but also checking the pressure applied when a jelly-roll type electrode assembly is inserted into the cylindrical battery case.

### [Technical Solution]

A cylindrical battery case inspection apparatus according to the present invention to accomplish the above object includes a fixing unit configured to fix a cylindrical battery case, a support member attached to the fixing unit and supporting the fixing unit, a stand to which the support member is coupled, an inner diameter measurement unit configured to measure the inner diameter of the cylindrical battery case, and a pressure measurement unit coupled to the bottom of the inner diameter measurement unit.

The cylindrical battery case inspection apparatus may further include a moving unit configured to move a measurement unit comprising the inner diameter measurement unit and the pressure measurement unit upward and downward.

The support member may include an upper portion to which the fixing unit is coupled and a lower portion coupled to the stand, and the upper portion may be configured to be couplable to and separable from the lower portion.

The inner diameter measurement unit may be configured to be couplable to and separable from the pressure measurement unit.

The pressure measurement unit may include a recess configured to receive a lower end of the inner diameter measurement unit therein, and the lower end of the inner diameter measurement unit may be inserted into and fixed to the recess.

The pressure measurement unit may include a male threaded portion protruding from an upper surface thereof, the inner diameter measurement unit may include a female threaded portion at a lower surface thereof having an inwardly concave shape and configured to mate with the male threaded portion, and the male threaded portion and the female threaded portion may be coupled to each other by screw fastening.

The pressure measurement unit may include a first pressure measurement portion and a second pressure measurement portion, the inner diameter measurement unit may include a first inner diameter measurement portion and a second inner diameter measurement portion, the first pressure measurement portion may be coupled to a lower end of the first inner diameter measurement portion and the second pressure measurement portion may be coupled to a lower end of the second inner diameter measurement portion, the first pressure measurement portion and the second pressure measurement portion may be coupled to the moving unit, and a rotating body rotatable on the stand may be attached to a bottom of the moving unit.

The fixing unit may include a first fixing portion having a curved shape complementary to a cylindrical side surface of the cylindrical battery case.

The fixing unit may include a second fixing portion configured to be coupled to a circular bottom of the cylindrical battery case.

The fixing unit may include a first fixing portion having a curved shape complementary to a cylindrical side surface of the cylindrical battery case and a second fixing portion configured to be coupled to a circular bottom of the cylindrical battery case.

The fixing unit may have a coupling surface including a magnetic material configured to couple the fixing unit and the cylindrical battery case to each other.

The inner diameter measurement unit may include a go gauge and a no-go gauge.

The magnitude of pressure of the pressure measurement unit may be set to zero whenever the go gauge or the no-go gauge is connected to the pressure measurement unit.

In addition, the present invention may provide various combinations of the above solving means.

### [Advantageous Effects]

In the present invention, a cylindrical battery case inspection apparatus is capable of determining whether the inner diameter of a cylindrical battery case meets the specifications through an inner diameter measurement unit and measuring the pressure applied to the cylindrical battery case inspection apparatus through a pressure measurement unit when inserted into the cylindrical battery case.

It is possible to determine whether the size of the cylindrical battery case is unsuitable for insertion of a jelly-roll type electrode assembly thereinto based on the measured pressure value even if the inner diameter of the cylindrical battery case meets the specifications.

### [Description of Drawings]

FIG. 1 is a perspective view of a cylindrical battery case inspection apparatus according to a first embodiment.
FIG. 2 is a perspective view of a cylindrical battery case inspection apparatus according to a second embodiment.
FIG. 3 is a perspective view showing that an inner diameter measurement unit and a pressure measurement unit are coupled to each other in the cylindrical battery case inspection apparatus according to the present invention.
FIG. 4 is a perspective view of a cylindrical battery case inspection apparatus according to a third embodiment.
FIG. 5 is a perspective view of a cylindrical battery case inspection apparatus according to a fourth embodiment.
FIG. 6 is a perspective view of a cylindrical battery case inspection apparatus according to a fifth embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

A cylindrical battery case inspection apparatus according to the present invention is an apparatus for measuring the inner diameter of a cylindrical battery case, which is a cylindrical battery case without a beading portion and/or a crimping portion formed thereon, the cylindrical battery case having an open top, a circular bottom, and a cylindrical side surface, wherein the inner diameter of the cylindrical side surface is uniform throughout the entirety of the side surface.

When determining whether the inner diameter of a cylindrical battery case is appropriate while directly inserting a jelly-roll type electrode assembly into the cylindrical battery case, the jelly-roll type electrode assembly may be damaged if the cylindrical battery case is defective. In this case, it is possible to determine the suitability of the cylindrical battery case using a method of inserting an inner diameter measurement unit into the cylindrical battery case instead of the jelly-roll type electrode assembly.

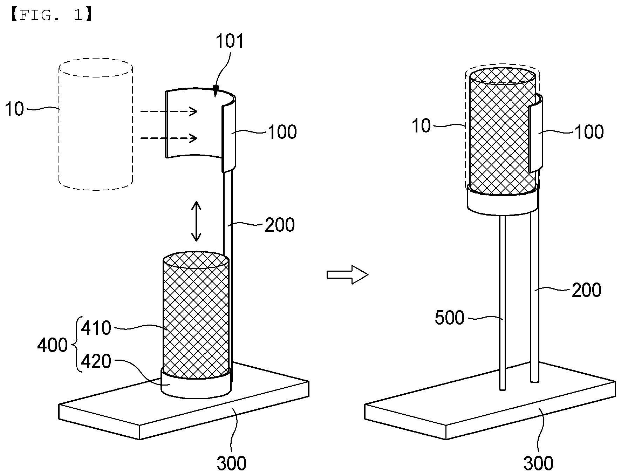

FIG. 1 is a perspective view of a cylindrical battery case inspection apparatus according to a first embodiment.

Referring to FIG. 1, the cylindrical battery case inspection apparatus according to the present invention includes a fixing unit 100 configured to fix a cylindrical battery case 10, a support member 200 attached to the fixing unit 100 so as to support the fixing unit 100, a stand 300 to which the support member 200 is coupled, an inner diameter measurement unit 410 configured to measure the inner diameter of the cylindrical battery case 10, and a pressure measurement unit 420 coupled to the bottom of the inner diameter measurement unit 410.

The cylindrical battery case 10 is fixed to the fixing unit 100 in the state in which the open top thereof faces downward. The support member 200, which is formed in the shape of a rod, is attached to the fixing unit 100, and the support member 200 is coupled to the stand 300 such that the longitudinal axis thereof is perpendicular to an upper surface of the stand 300. The fixing unit 100 is spaced apart from the stand 300 by a certain distance via the support member 200.

In one specific example, a magnetic material may be added to the coupling surface 101 of the fixing unit 100, to which the cylindrical battery case 10 is coupled, allowing the cylindrical battery case 10 and the fixing unit 100 to be coupled to each other due to magnetic force. In contrast, when fixing the cylindrical battery case using a tool such as a gripper, the cylindrical battery case may become dented, potentially making accurate inner diameter measurement difficult. In the present invention, however, it is possible to reduce the risk of deforming the appearance of the cylindrical battery case since magnetic force is used to couple the cylindrical battery case to the fixing unit.

In order to determine whether the inner diameter of the cylindrical battery case 10 meets the specifications, a process of inserting the inner diameter measurement unit 410 into the cylindrical battery case 10 fixed to the fixing unit 100 is performed. At this time, the magnitude of force required to insert the inner diameter measurement unit 410 into the cylindrical battery case 10 is measured by the pressure measurement unit 420.

In order to insert the inner diameter measurement unit 410 and the pressure measurement unit 420 into the cylindrical battery case 10, the cylindrical battery case inspection apparatus according to the present invention further includes a moving unit 500 configured to move a measurement unit 400 constituted by the inner diameter measurement unit 410 and the pressure measurement unit 420 upward and downward.

The structure of the moving unit 500 is not particularly limited as long as the moving unit can be deformed such that the length of the moving unit is increased or decreased or the moving unit can be coupled to a separate moving means such that the moving unit can be moved upward and downward.

The left figure in FIG. 1 shows a standby state before starting the measurement of the inner diameter of the cylindrical battery case, wherein the measurement unit 400 is disposed in contact with the stand 300. The right figure of FIG. 1 shows that, as the moving unit 500 coupled to the bottom of the pressure measurement unit 420 extends, the entirety of the measurement unit 400 moves upward, resulting in an upper end of the measurement unit 400 being inserted into the cylindrical battery case 10 up to the bottom thereof.

As such, the measurement unit 400 is configured to measure the inner diameter of the cylindrical battery case 10 while being inserted into the cylindrical battery case. The central axis of the inner diameter measurement unit 410 is aligned with the central axis of the cylindrical battery case 10.

The inner diameter measurement unit 410 may be configured as a cylindrical form having a diameter of a certain size, and the height of the inner diameter measurement unit 410 may be configured to be greater than the height of the cylindrical battery case to be measured.

The inner diameter measurement unit 410 may include a go gauge configured as a cylindrical form having a diameter of a size at which the cylindrical battery case can be recognized as a good product and a no-go gauge configured as a cylindrical form having a diameter too large to be inserted into the cylindrical battery case, and the inner diameter measurement unit 410 may be configured to be couplable to the pressure measurement unit 420 and to be separable from the pressure measurement unit.

In the case as shown in FIG. 1, therefore, each of the go gauge of the inner diameter measurement unit and the no-go gauge of the inner diameter measurement unit may be coupled to a single pressure measurement unit 420.

For example, first, the no-go gauge as the inner diameter measurement unit may be mounted to the pressure measurement unit 420, the measurement unit 400 may be moved upward to determine whether the measurement unit is inserted into the cylindrical battery case 10, the measurement unit 400 may be moved downward so as to be in the standby state before upward movement of the measurement unit, and the no-go gauge may be separated from the pressure measurement unit 420. After the go gauge as the inner diameter measurement unit is mounted to the pressure measurement unit 420, the measurement unit 400 is moved upward to determine whether the measurement unit is inserted into the cylindrical battery case 10. At this time, the pressure value measured by the pressure measurement unit 420 may be checked to determine whether the cylindrical battery case is defective.

That is, when the go gauge is inserted into the cylindrical battery case 10, if there is no predetermined gap between an outer surface of the go gauge and an inner surface of the cylindrical battery case 10 and thus the force required to insert the go gauge is excessively large, the jelly-roll type electrode assembly may be damaged when inserted into the cylindrical battery case, and therefore the cylindrical battery case may be classified as defective.

The pressure measurement unit 420 may be constituted by a load cell, which may be configured such that, when the inner diameter measurement unit 410 is inserted into the cylindrical battery case 10, the pressure at which the inner diameter measurement unit 410 presses the pressure measurement unit 420 is measured.

In addition, the pressure measurement unit may measure the inner diameter of the cylindrical battery case after the magnitude of pressure is set to zero whenever the go gauge or the no-go gauge is connected thereto.

The cylindrical battery case inspection method described above may be applied identically to all embodiments of the cylindrical battery case inspection apparatus included in the present invention.

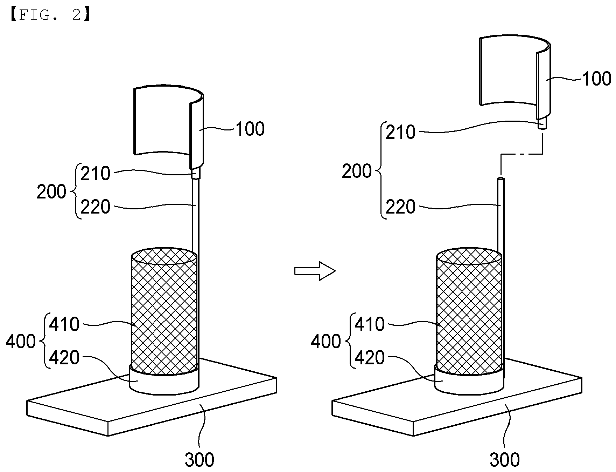

FIG. 2 is a perspective view of a cylindrical battery case inspection apparatus according to a second embodiment.

Referring to FIG. 2, the cylindrical battery case inspection apparatus according to the second embodiment is different from the cylindrical battery case inspection apparatus according to the first embodiment in that a support member 200 includes an upper portion 210 and a lower portion 220 configured to be separated from each other. Specifically, the support member 200 includes an upper portion 210 to which a fixing unit 100 is coupled and a lower portion 220 coupled to a stand 300, wherein the upper portion 210 may be separated from the lower portion 220 coupled to the stand 300 so as to be replaced with another upper portion.

Generally, a standardized cylindrical battery case is applied to a cylindrical battery cell, such as an 18650 battery cell, a 21700 battery cell, or a 4680 battery cell. In order to stably fix the cylindrical battery case to the fixing unit, it is necessary to increase the contact surface area between a coupling surface of the fixing unit and a cylindrical side surface of the cylindrical battery case. Particularly, when the cylindrical battery case is coupled to the fixing unit using magnetic force, as in the present invention, it is advantageous to secure a large contact surface area between the cylindrical battery case and the fixing unit in order to maintain a stable attachment state of the cylindrical battery case.

Therefore, it is preferable for the curvature radius of the coupling surface of the fixing unit to be equal or similar to the curvature radius of the cylindrical side surface of the cylindrical battery case. Accordingly, in the present invention, a fixing unit matching the size of the cylindrical battery case is selectively adopted to measure the inner diameter of the cylindrical battery case.

That is, the fixing unit 100 coupled to the upper portion 210 of the support member 200 may have a coupling surface 101 with a curvature radius identical or similar to that of the cylindrical side surface of the 18650 battery cell, the 21700 battery cell, or the 4680 battery cell. Therefore, a fixing unit 100 having a coupling surface matching the size of the cylindrical battery case is coupled to the upper portion 210 of the support member 200, the upper portion 210 to which the fixing unit 100 matching the cylindrical battery case, the inner diameter of which is to be measured, is attached may be coupled to the lower portion 220, and the inner diameter of the cylindrical battery case may be inspected.

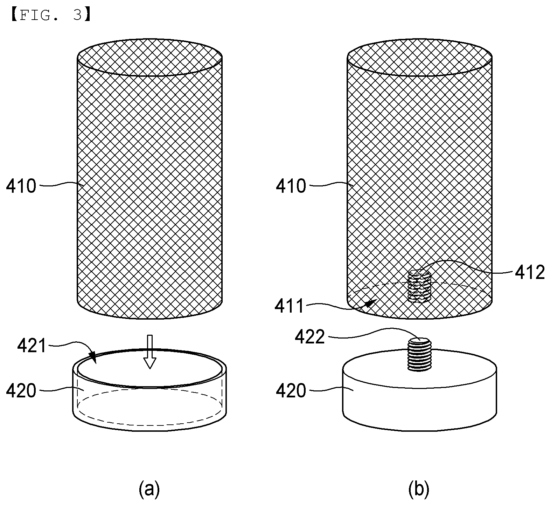

FIG. 3 is a perspective view showing that the inner diameter measurement unit and the pressure measurement unit are coupled to each other in the cylindrical battery case inspection apparatus according to the present invention.

Referring to FIG. 3, the pressure measurement unit 420 shown in (a) has a downwardly concave recess 421 formed therein, wherein a lower end of the inner diameter measurement unit 410 may be inserted into and fixed to the recess 421. In the configuration shown in (a), a pressure measurement unit 420 having a recess 421 formed so as to receive various outer diameter sizes of the inner diameter measurement unit 410 may be required. The pressure measurement unit 420 shown in (b) includes a male threaded portion 422 protruding from an upper surface thereof, and the inner diameter measurement unit 410 is provided at a lower surface 411 thereof with a female threaded portion 412 formed so as to be inwardly concave and to correspond to the male threaded portion 422, wherein the male threaded portion 422 and the female threaded portion 412 may be coupled to each other by screw fastening. In the configuration shown in (b), even if the outer diameter of the inner diameter measurement unit 410 changes, if the size of the female threaded portion 412 formed at the lower surface of the inner diameter measurement unit is constant, a plurality of inner diameter measurement units 410 may be interchangeably used for a single pressure measurement unit 420.

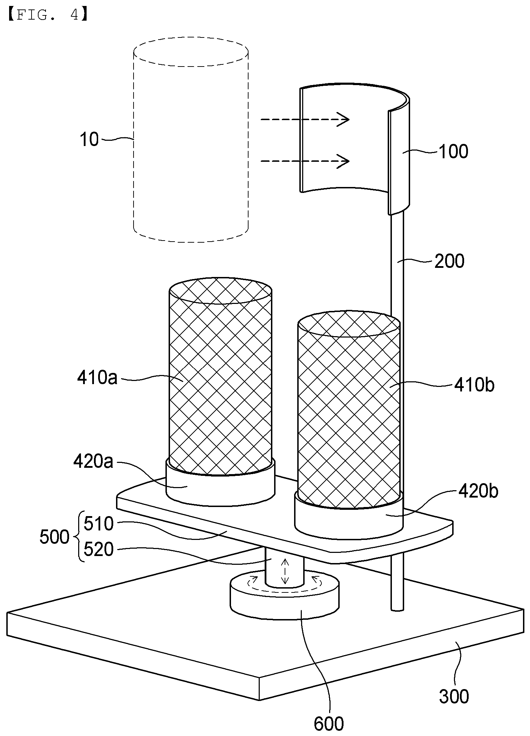

FIG. 4 is a perspective view of a cylindrical battery case inspection apparatus according to a third embodiment.

Referring to FIG. 4, when comparing the cylindrical battery case inspection apparatus according to the third embodiment to the cylindrical battery case inspection apparatus according to the first embodiment, a pressure measurement unit includes a first pressure measurement portion 420a and a second pressure measurement portion 420b, and an inner diameter measurement unit includes a first inner diameter measurement portion 410a and a second inner diameter measurement portion 410b, wherein the first pressure measurement portion 420a is coupled to a lower end of the first inner diameter measurement portion 410a, the second pressure measurement portion 420b is coupled to a lower end of the second inner diameter measurement portion 410b, and the first pressure measurement portion 420a and the second pressure measurement portion 420b are coupled to a moving unit 500.

The moving unit 500 includes a flat portion 510 parallel to an upper surface of a stand 300 and a deformation portion 520 coupled to the flat portion 510, the deformation portion having a length increasing or decreasing to move the flat portion 510 in an upward-downward direction.

A rotating body 600 rotatable on the stand 300 is attached to the bottom of the moving unit 500, wherein the rotating body 600 rotates in the state in which a flat surface of the rotating body is parallel to the flat portion of the stand 300. The rotation of the rotating body 600 causes one of a first measurement portion constituted by the first inner diameter measurement portion 410a and the first pressure measurement portion 420a and a second measurement portion constituted by the second inner diameter measurement portion 410b and the second pressure measurement portion 420b to be located under the cylindrical battery case 10 coupled to the fixing unit 100. When the first measurement portion or the second measurement portion is located under the cylindrical battery case 10, the deformation portion 520 extends, and the first inner diameter measurement portion 410a or the second inner diameter measurement portion 410b is moved upward inwardly of the cylindrical battery case 10.

One of the first inner diameter measurement portion 410a and the second inner diameter measurement portion 410b may be a go gauge, and the other may be a no-go gauge.

Even in the cylindrical battery case inspection apparatus according to the third embodiment shown in FIG. 4, each of the first inner diameter measurement portion 410a and the second inner diameter measurement portion 410b may be coupled to and separated from a corresponding one of the second pressure measurement portion 420a and the second pressure measurement portion 420b, as shown in (a) and (b) of FIG. 3. Therefore, the go gauge and the no-go gauge may be interchangeably coupled and used according to the size of the cylindrical battery case.

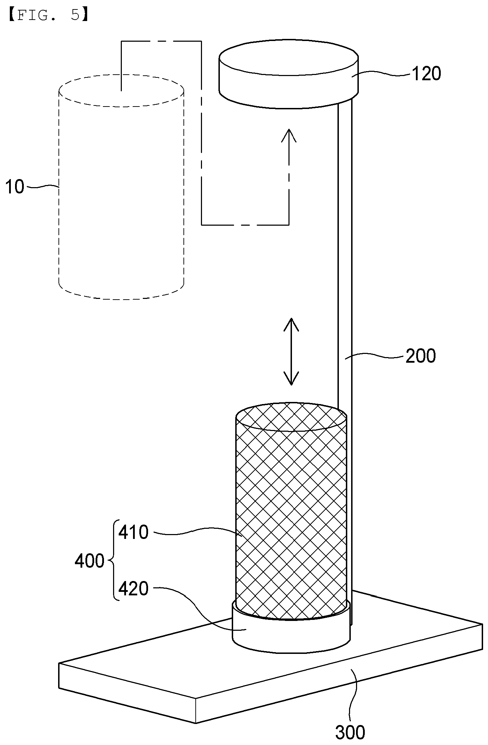

FIG. 5 is a perspective view of a cylindrical battery case inspection apparatus according to a fourth embodiment.

Referring to FIG. 5, the cylindrical battery case inspection apparatus according to the fourth embodiment is different from the cylindrical battery case inspection apparatus according to the first embodiment in that a fixing unit is constituted by a second fixing portion 120 coupled to the circular bottom of a cylindrical battery case 10.

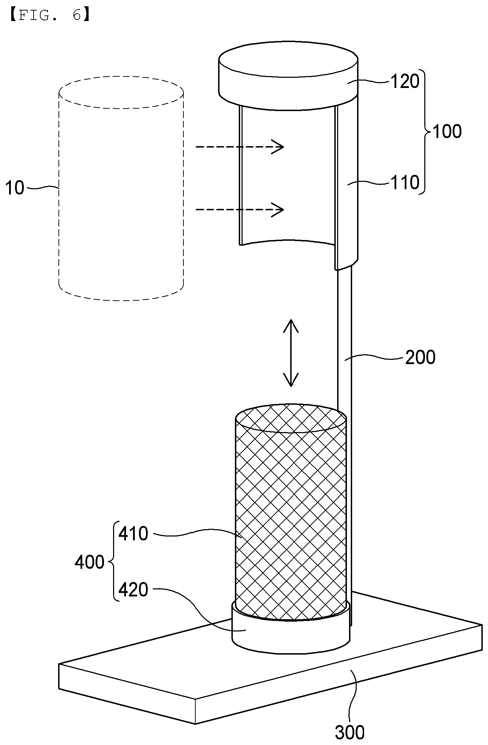

In the cylindrical battery case inspection apparatus according to the first embodiment, the fixing unit 100 includes a first fixing portion 110 configured to have a curved shape corresponding to the cylindrical side surface, as shown in FIG. 6. The second fixing portion 120 shown in FIG. 5 may be configured as a planar circular shape or a low-height cylindrical shape, and a lower surface of the second fixing portion 120 may be located parallel to an upper surface of a stand 300. When the cylindrical battery case 10 is coupled to the second fixing portion 120, therefore, the central axis of the cylindrical battery case 10 may be perpendicular to the stand 300.

A magnetic material may be added to a coupling surface of the second fixing portion 120 to which a bottom surface of the cylindrical battery case 10 is coupled, allowing the cylindrical battery case 10 and the second fixing portion 120 to be coupled to each other by magnetic force.

When the second fixing portion 120 is provided as the fixing unit, there is the advantage that the second fixing portion does not need to be replaced depending on the size of the cylindrical battery case.

Even in the cylindrical battery case inspection apparatus according to the fourth embodiment shown in FIG. 5, an inner diameter measurement unit 410 may be replaced with a first inner diameter measurement portion 410a and a second inner diameter measurement portion 410b, and a pressure measurement unit 420 may be replaced with a first pressure measurement portion 420a and a second pressure measurement portion 420b, wherein each of the first inner diameter measurement portion 410a and the second inner diameter measurement portion 410b may be coupled to and separated from a corresponding one of the first pressure measurement portion 420a and the second pressure measurement portion 420b, as shown in (a) and (b) of FIG. 3. Therefore, a go gauge and a no-go gauge may be interchangeably coupled and used according to the size of the cylindrical battery case.

FIG. 6 is a perspective view of a cylindrical battery case inspection apparatus according to a fifth embodiment.

Referring to FIG. 6, the cylindrical battery case inspection apparatus according to the fifth embodiment is different from the cylindrical battery case inspection apparatus according to the first embodiment in that a fixing unit 100 includes a first fixing portion 110 configured to have a curved shape corresponding to a cylindrical side surface of a cylindrical battery case 10 and a second fixing portion 120 coupled to a circular bottom of the cylindrical battery case 10.

A magnetic material may be added to a coupling surface of the fixing unit 100 including the first fixing portion 110 and the second fixing portion 120 to which the cylindrical battery case 10 is coupled, allowing the fixing unit 100 and the cylindrical battery case 10 to be coupled to each other by magnetic force.

When the fixing unit 100 including the first fixing portion 110 and the second fixing portion 120 is employed, as described above, it is possible to secure a wide coupling surface between the fixing unit 100 and the cylindrical battery case 10, enabling stable fixation of the cylindrical battery case 10.

Even in the cylindrical battery case inspection apparatus according to the fifth embodiment shown in FIG. 6, an inner diameter measurement unit 410 may be replaced with a first inner diameter measurement portion 410a and a second inner diameter measurement portion 410b, and a pressure measurement unit 420 may be replaced with a first pressure measurement portion 420a and a second pressure measurement portion 420b, wherein each of the first inner diameter measurement portion 410a and the second inner diameter measurement portion 410b may be coupled to and separated from a corresponding one of the first pressure measurement portion 420a and the second pressure measurement portion 420b, as shown in (a) and (b) of FIG. 3. Therefore, a go gauge and a no-go gauge may be interchangeably coupled and used according to the size of the cylindrical battery case.

Those skilled in the art to which the present invention pertains will appreciate that various applications and modifications are possible within the category of the present invention based on the above description.

### (Description of Reference Symbols)

- 10:: Cylindrical battery case
- 100:: Fixing unit
- 101:: Coupling surface
- 110:: First fixing portion
- 120:: Second fixing portion
- 200:: Support member
- 210:: Upper portion
- 220:: Lower portion
- 300:: Stand
- 400:: Measurement unit
- 410:: Inner diameter measurement unit
- 410a:: First inner diameter measurement portion
- 410b:: Second inner diameter measurement portion
- 411:: Lower surface
- 412:: Female threaded portion
- 420:: Pressure measurement unit
- 420a:: First pressure measurement portion
- 420b:: Second pressure measurement portion
- 421:: Recess
- 422:: Male threaded portion
- 500:: Moving unit
- 510:: Flat portion
- 520:: Deformation portion
- 600:: Rotating body

## Claims

1. A cylindrical battery case inspection apparatus comprising:
a fixing unit configured to fix a cylindrical battery case;
a support member attached to the fixing unit and supporting the fixing unit;
a stand to which the support member is coupled;
an inner diameter measurement unit configured to measure an inner diameter of the cylindrical battery case; and
a pressure measurement unit coupled to a bottom of the inner diameter measurement unit.

2. The cylindrical battery case inspection apparatus according to claim 1, further comprising a moving unit configured to move a measurement unit comprising the inner diameter measurement unit and the pressure measurement unit upward and downward.

3. The cylindrical battery case inspection apparatus according to claim 1, wherein
the support member comprises an upper portion to which the fixing unit is coupled and a lower portion coupled to the stand, and
the upper portion is configured to be couplable to and separable from the lower portion.

4. The cylindrical battery case inspection apparatus according to claim 1, wherein the inner diameter measurement unit is configured to be couplable to and separable from the pressure measurement unit.

5. The cylindrical battery case inspection apparatus according to claim 4, wherein
the pressure measurement unit comprises a recess configured to receive a lower end of the inner diameter measurement unit therein, and
the lower end of the inner diameter measurement unit is inserted into and fixed to the recess.

6. The cylindrical battery case inspection apparatus according to claim 4, wherein
the pressure measurement unit comprises a male threaded portion protruding from an upper surface thereof,
the inner diameter measurement unit comprises a female threaded portion at a lower surface thereof having an inwardly concave shape and configured to mate with the male threaded portion, and
the male threaded portion and the female threaded portion are coupled to each other by screw fastening.

7. The cylindrical battery case inspection apparatus according to claim 2, wherein
the pressure measurement unit comprises a first pressure measurement portion and a second pressure measurement portion,
the inner diameter measurement unit comprises a first inner diameter measurement portion and a second inner diameter measurement portion,
the first pressure measurement portion is coupled to a lower end of the first inner diameter measurement portion and the second pressure measurement portion is coupled to a lower end of the second inner diameter measurement portion,
the first pressure measurement portion and the second pressure measurement portion are coupled to the moving unit, and
a rotating body rotatable on the stand is attached to a bottom of the moving unit.

8. The cylindrical battery case inspection apparatus according to claim 1, wherein the fixing unit comprises a first fixing portion having a curved shape complementary to a cylindrical side surface of the cylindrical battery case.

9. The cylindrical battery case inspection apparatus according to claim 1, wherein the fixing unit comprises a second fixing portion configured to be coupled to a circular bottom of the cylindrical battery case.

10. The cylindrical battery case inspection apparatus according to claim 1, wherein the fixing unit comprises:
a first fixing portion having a curved shape complementary to a cylindrical side surface of the cylindrical battery case; and
a second fixing portion configured to be coupled to a circular bottom of the cylindrical battery case.

11. The cylindrical battery case inspection apparatus according to claim 1, wherein the fixing unit has a coupling surface including a magnetic material configured to couple the fixing unit and the cylindrical battery case to each other.

12. The cylindrical battery case inspection apparatus according to claim 1, wherein the inner diameter measurement unit comprises a go gauge and a no-go gauge.

13. The cylindrical battery case inspection apparatus according to claim 12, wherein a magnitude of pressure of the pressure measurement unit is set to zero whenever the go gauge or the no-go gauge is connected to the pressure measurement unit.
